# EUROPEAN PATENT SPECIFICATION

(11) **EP 1 844 667 B1**
(45) Date of publication and mention of the grant of the patent: **06.04.2011**
(21) Application number: 06425253.9
(22) Date of filing: 10.04.2006
(51) Int. Cl.: A23L 2/00, A23L 2/02, A23L 2/38

(54) **Drink containing functional ingredients capable of preventing degenerative phenomena caused by oxidizing agents**
Getränk enthaltend funktionelle Zutaten zur Verhinderung von durch Oxidationsmittel hervorgerufenen degenerativen Phänomenen
Boisson contenant des ingrédients fonctionnels capables de prévenir les phénomènes dégénératifs causés par des agents oxydants

(43) Date of publication of application: 17.10.2007
(60) Divisional application: 10182524.8
(73) Proprietor: Barilla G. e R. Fratelli S.p.A., 43100 Parma (IT)
(72) Inventor: De Albertis, Pietro, I-43022 Montechiarugolo (Parma) (IT); Melegari, Camilla, I-43100 Parma (IT)
(74) Representative: Zambardino, Umberto

(56) References cited:
- WO-A-02/065846
- RIGHETTO A M ET AL: "CHEMICAL COMPOSITION AND ANTIOXIDANT ACTIVITY OF JUICES FROM MATURE AND IMMATURE ACEROLA (MALPIGHIA EMARGINATA DC)" FOOD SCIENCE AND TECHNOLOGY INTERNATIONAL, NEW YORK, NY, US, vol. 11, 2005, pages 315-321, XP009072874 ISSN: 1082-0132
- DANIEL RÖSCH, MEIKE BERGMANN, DIETRICH KNORR, AND LOTHAR W. KROH: "Structure-Antioxidant Efficiency Relationships of Phenolic Compounds and Their Contribution to the Antioxidant Activity of Sea Buckthorn Juice" JOURNAL OF AGRICULTURAL AND FOOD CHEMISTRY, AMERICAN CHEMICAL SOCIETY. WASHINGTON, US, vol. 51, no. 15, 2003, pages 4233-4239, XP002400662
- NICK HIDIROGLOU, RENE MADERE AND WILLY BEHRENS: "Electrochemical Determination of Ascorbic Acid and Isoascorbic Acid in Ground Meat and in Processed Foods by High Pressure Liquid Chromatography" JOURNAL OF FOOD COMPOSITION AND ANALYSIS, vol. 11, no. 1, 1998, pages 89-96, XP002400663
- TSANOVA-SAVOVA S ET AL: "(+)-Catechin and (-)-epicatechin in Bulgarian fruits" JOURNAL OF FOOD COMPOSITION AND ANALYSIS, ACADEMIC PRESS, LONDON, GB, vol. 18, no. 7, November 2005 (2005-11), pages 691-698, XP004860155 ISSN: 0889-1575
- DATABASE FSTA [Online] INTERNATIONAL FOOD INFORMATION SERVICE (IFIS), FRANkFURT-MAIN, DE; 1992, SEDOVA Z A ET AL: "Quality evaluation of redcurrants and their products." XP002400665 Database accession no. 93-1-11-j0061 & SADOVODSTVO I VINOGRADARSTVO, 1992, SADOVODSTVO I VINOGRADARSTVO 1992 NII SELEKTSII I SORTORAZVEDENIYA PLODOVYKH KUL'TUR, 303130 OREL, UKRAINE
- MURAKAMI M; YAMAGUCHI T; TAKAMURA H; MATOBA T: "Effects of ascorbic acid and alpha-tocopherol on antioxidant activity of polyphenolic compounds" JOURNAL OF FOOD SCIENCE, vol. 68, no. 5, 2003, pages 1622-1625, XP009072926

## Description

### Field of application

The present invention generally refers to the food and dietary industry.

In particular, the invention concerns a drink containing functional ingredients capable of exerting a beneficial effect on the health of an individual, preventing degenerative phenomena caused by oxidative agents.

The present invention also regards a preparation process of a drink of the aforesaid type.

### Prior art

It has been known by now for several decades that the damages which a living organism sustains over time is due to the accumulation of the so-called free radicals, which carry out a powerful oxidising action, harmful for nearly all parts of the organism.

The free radicals are unstable molecules which chemically react with any molecular structure they encounter in the organism; they are held responsible for or are in any case connected with various diseases, such as for example atherosclerosis, hypertension, ictus, Alzheimer's disease, Parkinson's disease, cataracts, retinitis pigmentosa, arthritis and perhaps also cancer.

The free radicals are formed in the mitochondria, wherein the oxygen is used for producing energy, as not all of the oxygen is consumed but in part it goes to form these unstable molecules.

The free radical produced in greatest quantities is the superoxide anion O₂-, which can react with the hydrogen peroxide and form the dangerous hydroxyl radical OH-. Other radicals which form in the organism are the following: NO-, NO₂₋, O₂+.

The free radicals are continually formed and their production is increased in conditions of stress, exposure to UV (sun) radiation, high calorie diet or in intense physical activity.

In the young organism, free radicals are effectively buffered but over time the elimination action of the free radicals becomes less effective and the organism enters into a condition of oxidative stress, favouring the aggression of the free radicals towards various molecules and cellular structures, such as DNA, chromosomes, mitochondria and membranes.

The polyunsaturated fats and phospholipids are particularly vulnerable to the oxidative stress, which causes for example the conversion of the phosphatidylcholine into lysophosphatidylcholine and oxidises the apoprotein B 100 of the LDLs, making it unrecognisable to the receptors. The oxidated lipoproteins LDLs cause vasoconstriction, increasing the adhesion of the white corpuscles, increasing the platelet aggregation, which constitutes the initial step of arteriosclerosis.

One aid in the reduction of the free radicals is provided by various molecules of vegetable origin, such as vitamins, bioflavonoids and pigments. Plants exposed for many hours to the action of the air and light have in fact developed defence systems for protecting their DNA, sugars, fats and proteins from oxidation and from free radicals; these include tocopherols, which are found for example in vegetable oils, in green leaves, isoprenes, which are found for example in peppers, apricots and broccoli, anthocyanin pigments, which are found in intense or dark red colour fruit; and polyphenols, which are found in strawberries, onions and citrus fruit.

A regular and abundant consumption of fruits and vegetables can without a doubt be of benefit in the struggle against the free radicals and is indeed recommended by nutritionists. This consumption can be advantageously accompanied by the intake of the abovementioned active principles in the form of dietary preparations (extracts, tablets, capsules etc.).

Nevertheless, to ensure a constant and continuative intake of the abovementioned anti-free radical active principles, their administration should be foreseen through foods of daily consumption, rather than by means of capsules or tablets. Drinks constitute an ideal food medium for such administration since they are enjoyed by most consumers, are easily prepared and are adapted for consumption even outside the home environment.

In this regard, the prior art has studied and developed different alimentary drinks essentially composed of tea or one of its derivatives, already *per se* provided with natural antioxidants (principally catechins) and enriched with antioxidant ingredients. An alimentary drink of this type essentially composed of tea and enriched with vitamins is described for example in the patent JP 3228646.

The patent application WO 02/065846 describes a drink comprising, in dissolved form and in predetermined proportions, epicatechins, non-epicatechins and a water-soluble polymer. The water-soluble polymers can be extracted from natural products, in particular fruits such as blueberries and mandarin oranges, and different vegetables. The drink lends itself to being consumed as such or to be mixed with other drinks, in particular teas or juices.

Nevertheless, the aforesaid alimentary drinks do not always enjoy wide success with consumers, also due to a certain bitter aftertaste associated with them; moreover, tea being a stimulant, they have to be consumed with moderation. It follows that such alimentary drinks are little suited for wide consumption.

### Summary of the invention

The problem underlying the present invention was that of making available an alimentary drink containing a mixture of active principles suitable for opposing the damaging action of the free radicals on the organism and having at the same time good organoleptic characteristics, in particular taste, such to be able to be accepted by the final consumers.

A similar problem was solved, according to the invention, by a drink containing, in percentages by weight based on the total weight of the drink, at least 50% of water, 1-15% on dry basis of a product obtained from one or more red fruits, 0.05-0.1% of Vitamin C, 0.01-0.06% of Vitamin E and 0.01-0.05% of catechins, wherein said Vitamin C consists of synthesized ascorbic acid or is from an acerola extract with 50% of vitamin C, and said catechins are composed of a purified extract of green tea.

Preferably, the quantity of Vitamin C is in the range of 0.07-0.09%, the quantity of Vitamin E is in the range of 0.01-0.03% and the quantity of catechins is in the range of 0.02-0.04%.

The product obtained by one or more red fruits should be understood from the present description as being a product of the processing of said red fruits, such as for example a juice, extract, pulp, purée and nectar of red fruits (the latter also containing added sugary ingredients).

Preferably, the aforesaid product is composed of a juice of one or more red fruits, i.e. a juice obtained with a mechanical process starting from one or more mature red fruits (for example fresh or preserved by means of refrigeration) which possesses the characteristic colour, aroma and taste of the fruits from which it originates. Such juice can possibly be subjected to processes of dehydration, concentration or dilution.

The red fruits used in the drink according to the invention are preferably chosen from the group comprising raspberries, red whortleberry, blackberries, strawberries, red grapes, currant and their combination.

The drink according to the invention brilliantly solves the technical problem outlined above, since it has good organoleptic characteristics, in particular taste, together with a high antioxidant action (action of opposing the free radicals generated by the organism), the latter being conferred by the mixture of Vitamin E, Vitamin C and catechins. It should be noted moreover that this mixture advantageously confers to the drink according to the invention a plurality of antioxidant agents with different action mechanisms.

Surprisingly, the red fruits have shown that they synergistically potentiate the anti-free radical activity carried out by the mixture of Vitamin C, Vitamin E and catechins.

Moreover, the anthocyanidins contained in the red fruits have a documented antitumoral action.

Advantageously, the drink according to the invention can contain one or more sugary ingredients in an overall quantity, in percentages by weight based on the total weight of the drink, of 5-10%, preferably 7-9%. In such a manner the taste characteristics of the drink are enhanced, giving it at the same time with a moderate supply of sugars and carbohydrates.

The drink according to the invention can contain other optional ingredients, such as for example products obtained from fruits different from red fruits. Such products can be composed for example of fruit concentrates or purées, such as for example oranges and pineapple with high vitamin content.

The drink according to the invention is prepared by means of procedures which foresee the mixture of predetermined proportions of the abovementioned ingredients in an appropriate recipient or mixer. Preferably, the ingredients are mixed together in the following proportions (in percentages by weight based on the weight of the final drink):

At least 50% of water, 20-40% on wet basis of a product obtained from one or more red fruits, 0.05-0.1% of Vitamin C, 0.01-0.06% of Vitamin E and 0.01-0.05% of catechins. Optionally, 5-10%, preferably 7-9% of sugary ingredient(s) and/or a product obtained from fruits different from red fruits can be added in the mixing step.

The mixing is carried out under agitation and at room temperature or in any case at not greater than 40°C for a time necessary for the dissolution of the solid ingredients.

The Vitamin E is preferably added in a water-soluble form, in particular a hydrophilic matrix which incorporates said Vitamin E in the desired proportions. As a not limiting example, the tocopherol acetate can be incorporated into a hydrophilic matrix comprising starch and maltodextrin.

The aforesaid mixing can be carried out in a modified atmosphere, i.e. in an atmosphere wherein the air was previously substituted with appropriate inert gases, in particular nitrogen. In such a manner, the anti-free radical ingredients are protected from the degrading action of the oxygen.

The drink according to the invention can be packaged in pre-established amounts in conventional food containers, such as for example containers in plastic material, tetrapaks or cans, following *per se* conventional procedures.

### Detailed description of the invention

The drink according to the present invention will be further described by making reference to two examples provided herein below as illustrative and not limiting.

### EXAMPLE 1

A drink according to the present invention was prepared by mixing the following indicated ingredients in a mixer, in the following indicated proportions.

### Ingredients

| | |
|---|---|
| Red fruit juice¹ | 58.00 |
| Refined sugar | 16.00 |
| Water | 125.74 |
| Green tea extract² | 0.050 |
| Ascorbic acid³ | 0.150 |
| Alpha tocopheryl acetate⁴ | 0.060 |
| Total | 200 |

The above reported values are percentages by weight based on the total weight of the drink.
1) Raspberry and red grape juice having a water content equal to about 82%.
2) Containing 90-95% of epigallocatechingallate.
3) Pure preparation of ascorbic acid; alternatively a double quantity of acerola extract with 50% ascorbic acid.
4) Added in the form of a hydrophilic matrix comprising 50% alpha tocopheryl acetate (minimum content), starch and maltodextrin.

The aforesaid drink has good taste characteristics, as shown by a panel of tasters, as well as a high content of anti-free radical active principles. In particular, the Vitamin C content and the Vitamin E content are equal to about 100% of the respective effective daily amount.

### EXAMPLE 2

A drink according to the invention was prepared with the same modes described in the example 1 starting from the following ingredients:

### Ingredients

| | |
|---|---|
| Red fruit juice¹ | 50.00 |
| Refined sugar | 14.00 |
| Water | 135.73 |
| Green tea extract² | 0.070 |
| Ascorbic acid³ | 0.120 |
| Alpha tocopheryl acetate⁴ | 0.080 |
| Total | 200 |

The above reported values are percentages by weight based on the total weight of the drink. 1), 2), 3) and 4) are as indicated in example 1.

The aforesaid drink has good taste characteristics, as shown by a panel of tasters, and a high content of anti-free radical active principles.

## Claims

1. Drink containing, in percentages by weight based on the total weight of the drink, at least 50% of water, 1-15% on dry basis of a product obtained from one or more red fruits, 0.05-0.1% of Vitamin C, 0.01-0.06% of Vitamin E and 0.01-0.05% of catechins, wherein said Vitamin C consists of synthesized ascorbic acid or is from an acerola extract with 50% of vitamin C, and said catechins are composed of a purified extract of green tea.

2. Drink according to claim 1, wherein the quantity of Vitamin C is in the range of 0.07-0.09%, the quantity of Vitamin E is in the range of 0.01-0.03% and the quantity of catechins is in the range of 0.02-0.04%.

3. Drink according to any one of the preceding claims, wherein said product obtained from one or more red fruits is chosen from a juice, extract, pulp, purée and nectar of said one or more red fruits.

4. Drink according to claim 3, wherein said product is composed of a juice of one or more red fruits.

5. Drink according to any one of the preceding claims, wherein said red fruits are chosen from the group comprising raspberries, red whortleberry, blackberries, strawberries, red grapes, currant and their combination.

6. Drink according to any one of the preceding claims, further containing one or more sugary ingredients in an overall quantity, in percentage by weight based on the total weight of the drink, of 5-10%, preferably 7-9%.

7. Drink according to any one of the preceding claims, further containing a product obtained from fruits different from said red fruits, preferably a concentrate or purée of oranges and/or pineapple.

8. Process for the production of a drink according to any one of the preceding claims, comprising the step of mixing together, in percentages by weight based on the weight of the final drink, at least 50% of water, 20-40% on wet basis of a product obtained from one or more red fruits, 0.05-0.1% of Vitamin C, 0.01-0.06% of Vitamin E and 0.01-0.05% of catechins, wherein said Vitamin C consists of synthesized ascorbic acid or is from an acerola extract with 50% of vitamin C, and said catechins are composed of a purified extract of green tea.

9. Process according to claim 8, wherein said Vitamin E is added in the mixing step in the form of a hydrophilic matrix which contains it.

10. Process according to claim 8 or 9, wherein 5-10%, preferably 7-9% of sugary ingredient(s) are further added in the mixing step.

11. Process according to any one of the claims 8-10, wherein a product obtained from fruits different from red fruits is further added in the mixing step.

## Patentansprüche

1. Getränk, beinhaltend, in Gewichtsanteilen basierend auf dem Gesamtgewicht des Getränks, mindestens 50 % Wasser, 1 - 15 % auf Trockenbasis eines aus einer oder mehreren roten Früchten gewonnenen Produktes, 0,05 - 0,1 % Vitamin C, 0,01 - 0,06 % Vitamin E und 0,01 - 0,05 % Katechine, wobei das Vitamin C aus synthetischer Ascorbinsäure oder aus einem Acerola-Extrakt mit 50 % Vitamin C besteht, und die Katechine aus einem aufbereiteten Extrakt von grünem Tee zusammengesetzt sind.

2. Getränk nach Anspruch 1, wobei die Menge des Vitamin C im Bereich von 0,07 - 0,09%, die Menge des Vitamin E im Bereich von 0,01 - 0,03% und die Menge der Katechine im Bereich von 0,02 - 0,04% liegt.

3. Getränk nach einem der vorherigen Ansprüche, wobei das aus einer oder mehreren roten Früchten gewonnene Produkt aus einem Saft, Extrakt, Pulpe, Mark und Nektar der einen oder mehreren roten Früchte ausgewählt wurde.

4. Getränk nach Anspruch 3, wobei das Produkt aus einem Saft einer oder mehrerer roter Früchte zusammengesetzt ist.

5. Getränk nach einem der vorherigen Ansprüche, wobei die roten Früchte aus der Gruppe umfassend Himbeeren, rote Heidelbeere, Brombeeren, Erdbeeren, rote Trauben, Johannisbeere und deren Kombinationen ausgewählt sind.

6. Getränk nach einem der vorherigen Ansprüche, außerdem beinhaltend eine oder mehrere zuckrige Inhaltsstoffe in einer Gesamtmenge, im Gewichtsanteil basierend auf dem Gesamtgewicht des Getränks, von 5 - 10 %, vorzugsweise 7 - 9 %.

7. Getränk nach einem der vorherigen Ansprüche, außerdem beinhaltend ein aus Früchten, die von den roten Früchten verschieden sind, gewonnenes Produkt, vorzugsweise ein Konzentrat oder Mus von Orangen und/oder Ananas.

8. Verfahren zur Produktion eines Getränks nach einem der vorherigen Ansprüche, umfassend den Schritt des Zusammenmischens von, in Gewichtsanteilen basierend auf dem Gewicht des Endgetränks, mindestens 50 % Wasser, 20 - 40 % auf einer Nassbasis eines aus einer oder mehreren roten Früchten gewonnenen Produktes, 0,05 - 0,1 % Vitamin C, 0,01 - 0,06 % Vitamin E und 0,01 - 0,05 % Katechine, wobei das, Vitamin C aus synthetischer Ascorbinsäure oder aus einem Acerola-Extrakt mit 50% Vitamin C besteht, und die Katechine aus einem aufbereiteten Extrakt von grünem Tee zusammengesetzt sind.

9. Verfahren nach Anspruch 8, wobei das Vitamin E im Mischschritt in Form einer hydrophilen Matrix hinzugefügt wird, welche es beinhaltet.

10. Verfahren nach einem der Ansprüche 8 oder 9, wobei außerdem 5 - 10 %, vorzugsweise 7 - 9 % zuckrige(n) Inhaltsstoff(e) in dem Mischschritt hinzugefügt werden.

11. Verfahren nach einem der Ansprüche 8 bis 10, wobei außerdem ein aus Früchten, die von roten Früchten verschieden sind, gewonnenes Produkt in dem Mischschritt hinzugefügt werden.

## Revendications

1. Boisson contenant, en pourcentages en poids sur la base du poids total de la boisson, au moins 50 % d'eau, 1 à 15 % sur base sèche d'un produit obtenu à partir d'un ou plusieurs fruits rouges, 0,05 à 0,1 % de vitamine C, 0,01 à 0,06 % de vitamine E et 0,01 à 0,05 % de catéchines, dans laquelle ladite vitamine C est constituée d'acide ascorbique de synthèse ou est formée à partir d'un extrait d'acérola avec 50 % de vitamine C, et lesdites catéchines sont composées d'un extrait purifié de thé vert.

2. Boisson selon la revendication 1, dans laquelle la quantité de vitamine C se situe dans la plage de 0,07 à 0,09 %, la quantité de vitamine E se situe dans la plage de 0,01 à 0,03 % et la quantité de catéchines se situe dans la plage de 0,02 à 0,04 %.

3. Boisson selon l'une quelconque des revendications précédentes, dans laquelle ledit produit obtenu à partir d'un ou plusieurs fruits rouges est choisi parmi un jus, un extrait, de la pulpe, de la purée et du nectar desdits un ou plusieurs fruits rouges.

4. Boisson selon la revendication 3, dans laquelle ledit produit est composé d'un jus d'un ou plusieurs fruits rouges.

5. Boisson selon l'une quelconque des revendications précédentes, dans laquelle lesdits fruits rouges sont choisis dans le groupe comprenant les framboises, les airelles rouges, les mûres, les fraises, les raisins noirs, les groseilles et leurs combinaisons.

6. Boisson selon l'une quelconque des revendications précédentes, contenant en outre un ou plusieurs ingrédients sucrés en quantité globale, en pourcentage en poids sur la base du poids total de la boisson, de 5 à 10 %, de préférence de 7 à 9 %.

7. Boisson selon l'une quelconque des revendications précédentes, contenant en outre un produit obtenu à partir de fruits différents desdits fruits rouges, de préférence un concentré ou une purée d'oranges et/ou d'ananas.

8. Procédé pour la production d'une boisson selon l'une quelconque des revendications précédentes, comprenant l'étape de mélange conjoint, en pourcentages en poids sur la base du poids de la boisson finale, d'au moins 50 % d'eau, 20 à 40 % sur base humide d'un produit obtenu à partir d'un ou plusieurs fruits rouges, 0,05 à 0,1 % de vitamine C, 0,01 à 0,06 % de vitamine E et 0,01 à 0,05 % de catéchines, dans lequel ladite vitamine C est constituée d'acide ascorbique de synthèse ou est formée à partir d'un extrait d'acérola avec 50 % de vitamine C, et lesdites catéchines sont composées d'un extrait purifié de thé vert.

9. Procédé selon la revendication 8, dans lequel on ajoute ladite vitamine E à l'étape de mélange sous la forme d'une matrice hydrophile qui la contient.

10. Procédé selon la revendication 8 ou 9, dans lequel 5 à 10 %, de préférence 7 à 9 % d'ingrédient(s) sucré(s) sont encore ajoutés à l'étape de mélange.

11. Procédé selon l'une quelconque des revendications 8 à10, dans lequel un produit obtenu à partir de fruits autres que des fruits rouges est encore ajouté à l'étape de mélange.
